# EUROPEAN PATENT SPECIFICATION

(11) **EP 3 410 699 B1**
(45) Date of publication and mention of the grant of the patent: **15.03.2023**
(21) Application number: 17173892.5
(22) Date of filing: 01.06.2017
(51) Int. Cl.: H04N 5/50, H04N 21/438, H04N 21/45, H04N 21/488, H04N 21/81

(54) **CHANNEL TUNING AND DISPLAY OF ADDITIONAL CONTENT**
KANALABSTIMMUNG UND ANZEIGE VON ZUSÄTZLICHEN INHALT
RÉGLAGE DE CANAL ET AFFICHAGE DE CONTENU SUPPLÉMENTAIRE

(43) Date of publication of application: 05.12.2018
(73) Proprietor: Vestel Elektronik Sanayi ve Ticaret A.S., 45030 Manisa (TR)
(72) Inventor: KURT, Olkan, 45030 Manisa (TR)
(74) Representative: Kehl, Ascherl, Liebhoff & Ettmayr Patentanwälte Partnerschaft mbB

(56) References cited:
- EP-A1- 1 657 918
- DE-A1-102010 048 930
- US-B1- 6 593 973

## Description

The present invention refers to a method for avoiding black screens during channel tuning according to claim 1 of the present invention. The present invention refers according to claim 13 to a computer program product and according to claim 14 to a TV or television receiver.

### Background of the invention

It is known that when tuning from one channel to another channel with a receiver, there is some delay of 1-2 seconds and users see a black screen within this period. In order to solve this problem, current systems use more than one tuner. But using more than one tuner increases the cost and TVs will require more area.

Patent document EP 1 657 918 A1 discloses a method for displaying video information in a digital broadcast receiver during a change from a current channel to a new channel.

### Object of the invention

It is the object of the present invention to provide a channel tuning method that reduces user discomfort during channel tuning.

### Description of the Invention

The before mentioned object is solved by a method for avoiding black screens during channel tuning according to claim 1. A method which is not in accordance with the claims preferably comprises at least the steps: Causing a channel tuning event to tune a receiver from a first channel to a second channel, determining at least one property of the second channel or of the program provided on the second channel, determining predefined data and/or signals representing visual and/or acoustic content in dependency of the determined property, routing the predefined data and/or signals from at least one source to a display means for transferring the data and/or signals into visual and/or acoustic content, outputting the visual and/or acoustic content by means of the display means after the channel tuning event was caused and before the program of the second channel is displayed. This solution is beneficial since additional content can be visually and/or acoustically outputted to the users. The receiver can be an integrated respectively internal receiver of a TV or an external receiver.

Further preferred embodiments are subject-matter of the following specification parts and/or of the dependent claims.

According to a further preferred embodiment of the present invention one property of the second channel is derived from an Electronic Program Guide (EPG), wherein the property represents a content class, wherein the determined content class represents one of a predefined number of content classes, wherein each content class represents a value or function, wherein the time between the channel tuning event and displaying of the program of the second channel depends on the respective value or function and/or wherein the predefined data and/or signals representing visual and/or acoustic content depends on the respective value or function. Thus, the individual content classes are having different priorities. This embodiment is beneficial since further content can be outputted and selected independently of user preferences. Thus, in case the program of the second respectively further channel is of high interest (high priority) for the user the time between the tuning event and displaying of the program of the second channel will be short, in particularly as short as possible. In such a case only content can be displayed which can be understood in a fast manner, like pictures or short notices, like EPG information or message notifications. In case the program of the second respectively further channel is of minor interest (low priority) for the user the time between the tuning event and displaying of the program of the second channel will be longer compared to a high interest program. Thus, content with more information can be outputted. Therefore, content data of different kinds can be outputted in dependency of the classification of the program of the next channel. In particular content having an amount of information above or below a predefined threshold.

The predefined data and/or signals representing according to a further preferred embodiment of the present invention visual and/or acoustic content is/are requested by the receiver in dependency of the determined property, wherein predefined data and/or signals representing visual and/or acoustic content is preferably provided by a broadcast provider and highly preferably routed via the internet, cable, satellite or terrestrial antenna to the receiver. This embodiment is beneficial since program related content can be outputted during the channel changing event. Alternatively, or additionally the predefined data and/or signals are provided by an internet based service, in particular an instant messenger service, streaming service for music and/or video streaming, an advertising service and/or emergency service, etc. The term service can be understood in this context as software or platform or app.

The predefined data and/or signals representing visual and/or acoustic content are according to a further preferred embodiment of the present invention defined by means of a deep learning algorithm, wherein the deep learning algorithm processes data with respect to user interests and/or zapping behavior and/or profile data of a user. This embodiment is beneficial since preferably user behavior is analyzed and the respective content is provided in dependency of the user behavior. Thus, the user experience is getting better the longer a user interacts with the receiver respectively TV respectively system.

Profile data contains according to a further preferred embodiment of the present invention online service data representing at least one type of online service/s and/or frequency of usage of said online service/s.

The predefined data and/or signals are according to a further preferred embodiment of the present invention representing program information and/or advertising. This embodiment is beneficial since the user can gain further information about the program of the selected channel or further advertising can be displayed. Further information about the program may contain one or multiple of the following: Start time of the program, end time of the program, name of the program, name of the next program, start time of the next program, end time of the next program, names of the actors, etc.

The receiver derives according to a further preferred embodiment of the present invention from the channel signal or from an IP address location data representing area information, wherein the predefined data and/or signals are representing information gathered or provided in dependency of the location data. This embodiment is beneficial since a user e.g. based in London will receive notifications related to London or even to specific regions within London. Another user e.g. based in Paris will receive different notifications, in particularly related to Paris or even specific regions within Paris.

The predefined data and/or signals represent according to a further preferred embodiment of the present invention e.g. information about the weather in the identified area or in a preferred area and/or events in the identified area or in a preferred area. This embodiment is beneficial since the amount of information necessary for communicating a weather forecast can be very small, furthermore such information can be provided with figures or icons and are therefore easily understandable within a short time. Thus, such information can be provided during channel tuning even in case the next channel has a high priority.

Predefined data and/or signals is/are according to a further preferred embodiment of the present invention data or signals related to communication data or status data directed to a further end-user device and exchanged via a local network, like WLAN or ethernet, or an internet connection. This embodiment is beneficial since the receiver respectively TV can be set up in such a manner that data outputtable via a further end-user device, in particular computer, like smartphone, smartwatch or table PC, can be outputted in a modified or identical manner via the TV.

The end-user device and the receiver are according to a further preferred embodiment of the present invention connected to the same local network and in case the end-user device receives a message or a call a notification is transferred from the end-user device to the receiver and processed as predefined data and/or signal for displaying, wherein the displayed information represents the complete message, parts of the message or general information about the message. Additionally, or alternatively a direct connection between the receiver or TV and the end-user device can be set up. This embodiment is beneficial since the receiver or TV does not have to be connected to the internet it is sufficient to have a local connection to one or multiple end-user devices.

According to a further preferred embodiment of the present invention a predefined internet based service is operated on the end-user device and on the receiver, wherein the end-user device runs a software which is logged in to a specific user profile of that internet based service and wherein the receiver runs a software which is logged in to the same specific user profile of that internet based service, wherein in case a message or a call is received by that internet based service for that specific user profile the receiver processes that message or call as predefined data and/or signal for displaying, wherein the displayed information represents the complete message, parts of the message or general information about the message. This embodiment is beneficial since content of cloud based services can be used to decrease user discomfort during channel tuning.

The internet based service is according to a further preferred embodiment of the present invention an instant messenger service or an email service or a calendar service. This embodiment is beneficial since the user has an overview about one or multiple communication paths without having to check the smartwatch, tablet PC or smartphone.

The predefined data represents according to a further preferred embodiment of the present invention status data of an end-user device, wherein the end-user device is a smart household item, like a wash machine, dish washer, oven, refrigerator, vacuum cleaner, heater, door, window, floor or the like. This embodiment is beneficial since the user receives information about one or multiple individual devices. Thus, in case of a smart oven, the temperature of the oven, the remaining cooking time, alerts, etc. can be communicated to the end-user. In case of a dish washer or wash machine the remaining washing time, program and/or energy consumption can be communicated to the end-user. In case of windows or doors it can be communicated to the end-user if they are opened or closed. In case of a refrigerator it can be communicated to the end-user which food is present. In case of heater or floor it can be communicated to the end-user if these objects are in use or when they were in use. In case of a vacuum cleaner it can be communicated to the end-user if dirt needs to be removed from a dirt tray and/or when the next cleaning starts and/or if parts of the vacuum cleaner need to removed.

Further benefits, goals and features of the present invention will be described by the following specification of the attached figure, in which exemplarily steps of the invention are illustrated. Steps of the methods according to the invention, which match at least essentially with respect to their function can be marked with the same reference sign, wherein such steps do not have to be marked or described multiple times with respect to said figure. In the following the invention is just exemplarily described with respect to the attached figure.

The invention is defined by the combination of features of the independent claims 1, 13 and 14. Preferred embodiments are defined in the dependent claims.

### Brief Description of the Drawing

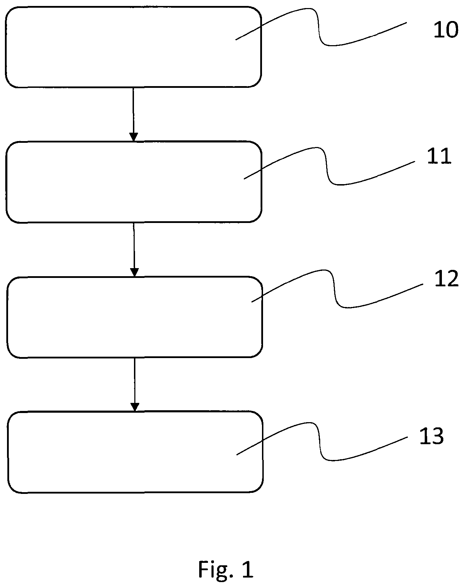

Fig. 1 shows preferred steps of the method according to the present invention.

### Detailed Description of the Drawing

Reference number 10 of Fig. 1 indicates a preferred step of detecting the type of program of a selected channel. Reference number 11 indicates the preferred step of assigning a coefficient to the detected program. Reference number 12 indicates the preferred step of extending the time delay between the selection of the new channel and displaying of the program of the selected channel according to a coefficient. Reference number 13 indicates the preferred step of placing content, in particular short or long scene instead of black screen The inventive channel tuning method preferably provides a solution to avoid black screens during channel tuning. The inventive channel tuning method preferably includes the following steps:
Causing a channel tuning event to tune a receiver from a first channel to a second channel, determining at least one property of the second channel or of the program provided on the second channel. Determining predefined data and/or signals representing content to be visually and/or acoustically outputted in dependency of the determined property, in particularly by using EPG data and some deep learning algorithms, which is known in prior art, for detecting what kind of programming is playing in the new channel to be tuned. Thus, this step preferably causes a detection of the type of program of a selected channel. Assigning a program coefficient to the channel according to priority of the programming. This priority can be defined by user or by default. For example, a live sport game can have a high priority whereas an advertisement has a low priority. The following list exemplifies priority coefficients: Sport 5, Ads 1, Soap Opera 2, Film 4, Music 3, News 6. According to program coefficients, the time delay between tuning from a channel to another channel (another channel is prioritized) is extended. Routing the predefined data and/or signals from at least one source to a display means for transferring the data and/or signals into visual and/or acoustic content. Thus, one property of the second channel is preferably derived from an EPG, wherein the property represents a content class (Sport, Ads, Soap Opera, film, Music, or the like), wherein the determined content class represents one of a predefined number of content classes, wherein each content class represents a value or function or priority coefficients, wherein the time between the channel tuning event and displaying of the program of the second channel depends on the respective value or function or priority coefficient and/or wherein the predefined data and/or signals representing visual and/or acoustic content depends on the respective value or function or priority coefficient. A calculation of extending time delay can be performed according to following exemplary formula: Delay = (6 - Program respectively priority coefficient) x 2 sec. For example, if a programming is an ad, then its coefficient becomes 1 and the provider extends the tuning delay to 10 seconds. In this period, the content provider can display an ad of itself, or can display a coming schedule (EPG) or another video.

Outputting the visual and/or acoustic content by means of the display means after the channel tuning event was caused and before the program of the second channel is displayed. If the new time interval is short, a short ad or video scene or some EPG data can be placed instead of black screen by the content provider or some communication data or some status data can be outputted instead of a black screen. If the new time interval is long, placing a long ad or video scene or some EPG data or some communication data or status data instead of black screen by the content provider or some communication data or some status data can be outputted instead of a black screen. The content provider might display a warning stating the type of programming and starts to display the scene that the provider wants to show. The user can be able to skip this scene after 1-2 sec of tuning. Thus, this step preferably describes placing of content, in particular short or long scene, instead of black screen.

Thus, the present invention refers to a method for channel tuning. The present method preferably comprises at least multiple of the following steps: Causing a channel tuning event to tune a receiver from a first channel to a second channel.

Thus, one property of the second channel is preferably derived from an EPG. The preferred property can be a content class. The determined content class preferably represents one of a predefined number of content classes, wherein each content class preferably represents a value or function. The time between the channel tuning event and displaying of the program of the second channel therefore preferably depends on the respective value or function and/or the predefined data and/or signals representing visual and/or acoustic content depends on the respective value or function.

Routing the predefined data and/or signals from at least one source to a display means for transferring the data and/or signals into visual and/or acoustic content.

Therefore, the key point in this invention might be described as prioritizing the programming on a new channel to be tuned, and displaying, in particularly by content provider, another scene instead of black screen.

The scope of the present invention is however defined by the claims.

### List of reference numbers

- 10: step of detecting the type of program of a selected channel
- 11: step of assigning a coefficient to the detected program
- 12: step of extending the time delay between the selection of the new channel and displaying of the program of the selected channel according to a coefficient
- 13: step of placing content, in particular short or long scene instead of black screen

## Claims

1. Method for avoiding black screens during channel tuning,
at least comprising the steps:
Causing a channel tuning event to tune a receiver from a first channel to a second channel,
Determining (10) at least one property of the second channel,
wherein the at least one property of the second channel is derived from an EPG,
wherein the property represents a content class,
wherein the determined content class represents one of a predefined number of content classes,
wherein each content class represents a value or function,
Determining predefined data and/or signals representing content to be visually and/or acoustically outputted in dependency of the determined property,
Routing the predefined data and/or signals from at least one source to a display means for transferring the data and/or signals into visual and/or acoustic content,
Outputting (13) the visual and/or acoustic content by means of the display means after the channel tuning event was caused and before the program of the second channel is displayed,
wherein the time between the channel tuning event and displaying of the program of the second channel depends on the respective value or function.

2. Method according to claim 1,
**characterized in that**
the predefined data and/or signals representing visual and/or acoustic content is/are requested by the receiver in dependency of the determined property,
wherein predefined data and/or signals representing visual and/or acoustic content is provided by a broadcast provider and routed via the internet, cable, satellite or terrestrial antenna to the receiver.

3. Method according to any of the preceding claims,
**characterized in that**
the predefined data and/or signals representing visual and/or acoustic content are defined by means of a deep learning algorithm, wherein the deep learning algorithm processes data with respect to user interests and/or zapping behavior and/or profile data of a user.

4. Method according to claim 3,
**characterized in that**
profile data contains online service data representing type of online service/s, frequency of usage of said online service/s,

5. Method according to any of the preceding claims,
**characterized in that**
the predefined data and/or signals representing program information and/or advertising.

6. Method according to any of the preceding claims,
**characterized in that**
the receiver derives from the channel signal or from an IP address location data representing area information, wherein the predefined data and/or signals are representing information gathered in dependency of the location data.

7. Method according to claim 6,
**characterized in that**
the predefined data and/or signals represent information about
the weather in the identified area or in a preferred area and/or
events in the identified area or in a preferred area.

8. Method according to any of the preceding claims,
**characterized in that**
predefined data and/or signals is/are data related to communication data or status data directed to a further end-user device and exchanged via an internet connection.

9. Method according to claim 8,
**characterized in that**
the end-user device and the receiver are connected to the same local network and in case the end-user device receives a message or a call a notification is transferred from the end-user device to the receiver and processed as predefined data and/or signal for displaying, wherein the displayed information represents the complete message, parts of the message or general information about the message.

10. Method according to claim 9,
**characterized in that**
a predefined internet based service is operated on the end-user device and on the receiver, wherein the end-user device runs a software which is logged in to a specific user profile of that internet based service and wherein the receiver runs a software which is logged in to the same specific user profile of that internet based service, wherein in case a message or a call is received by that internet based service for that specific user profile the receiver processes that message or call as predefined data and/or signal for displaying, wherein the displayed information represents the complete message, parts of the message or general information about the message.

11. Method according to claims 8, 9 or 10,
**characterized in that**
the internet based service is an instant messenger service or an email service or calendar service.

12. Method according to claims 8, 9 or 10,
**characterized in that**
the predefined data represents status data of an end-user device, wherein the end-user device is a smart household item, like a wash machine, dish washer, oven, refrigerator, vacuum cleaner, heater, door, window, floor or the like.

13. Computer program product for carrying out the method of anyone of claims 1 to 12 when said program product is run on a computer.

14. TV or television receiver,
at least comprising a processor unit equipped to execute the steps of the method of anyone of the claims 1 to 12.

## Patentansprüche

1. Verfahren zur Vermeidung von schwarzen Bildschirmen bei der Kanalabstimmung,
das mindestens die folgenden Schritte umfasst:
Veranlassen eines Kanalabstimmungsereignisses, um einen Empfänger von einem ersten Kanal auf einen zweiten Kanal abzustimmen,
Bestimmen (10) mindestens einer Eigenschaft des zweiten Kanals,
wobei die mindestens eine Eigenschaft des zweiten Kanals von einem EPG abgeleitet ist,
wobei die Eigenschaft eine Inhaltsklasse darstellt,
wobei die bestimmte Inhaltsklasse eine von einer vordefinierten Anzahl von Inhaltsklassen darstellt,
wobei jede Inhaltsklasse einen Wert oder eine Funktion darstellt,
Ermitteln von vordefinierten Daten und/oder Signalen, die einen visuell und/oder akustisch auszugebenden Inhalt darstellen, in Abhängigkeit von der ermittelten Eigenschaft,
Weiterleiten der vordefinierten Daten und/oder Signale von mindestens einer Quelle an ein Anzeigemittel zur Umsetzung der Daten und/oder Signale in visuelle und/oder akustische Inhalte,
Ausgeben (13) des visuellen und/oder akustischen Inhalts mittels des Anzeigemittels, nachdem das Kanalabstimmungsereignis ausgelöst wurde und bevor das Programm des zweiten Kanals angezeigt wird,
wobei die Zeit zwischen dem Kanalabstimmungsereignis und der Anzeige des Programms des zweiten Kanals von dem jeweiligen Wert oder der Funktion abhängt.

2. Verfahren nach Anspruch 1,
**dadurch gekennzeichnet, dass**
die vordefinierten Daten und/oder Signale, die visuelle und/oder akustische Inhalte repräsentieren, von dem Empfänger in Abhängigkeit von der ermittelten Eigenschaft angefordert werden,
wobei die vordefinierten Daten und/oder Signale, die visuelle und/oder akustische Inhalte repräsentieren, von einem Rundfunkanbieter bereitgestellt und über das Internet, Kabel, Satellit oder terrestrische Antenne an den Wiederempfänger geleitet werden.

3. Verfahren nach einem der vorhergehenden Ansprüche,
**dadurch gekennzeichnet, dass**
die vordefinierten Daten und/oder Signale, die visuelle und/oder akustische Inhalte repräsentieren, mittels eines Deep-Learning-Algorithmus definiert werden, wobei der Deep-Learning-Algorithmus Daten in Bezug auf Nutzerinteressen und/oder Zappingverhalten und/oder Profildaten eines Nutzers verarbeitet.

4. Verfahren nach Anspruch 3,
**dadurch gekennzeichnet, dass**
Profildaten Online-Dienstdaten enthalten, die die Art des/der Online-Dienstes/e und die Häufigkeit der Nutzung des/der Online-Dienstes/e repräsentieren,

5. Verfahren nach einem der vorhergehenden Ansprüche,
**dadurch gekennzeichnet, dass**
die vordefinierten Daten und/oder Signale Programminformationen und/oder Werbung darstellen.

6. Verfahren nach einem der vorangehenden Ansprüche,
**dadurch gekennzeichnet, dass**
der Empfänger aus dem Kanalsignal oder aus einer IP-Adresse Ortsdaten ableitet, die Gebietsinformationen repräsentieren, wobei die vordefinierten Daten und/oder Signale Informationen repräsentieren, die in Abhängigkeit von den Ortsdaten erfasst werden.

7. Verfahren nach Anspruch 6,
**dadurch gekennzeichnet, dass**
die vordefinierten Daten und/oder Signale Informationen darstellen über
das Wetter in dem identifizierten Gebiet oder in einem bevorzugten Gebiet und/oder Ereignisse in dem identifizierten Gebiet oder in einem bevorzugten Gebiet darstellen.

8. Verfahren nach einem der vorhergehenden Ansprüche,
**dadurch gekennzeichnet, dass**
die vordefinierten Daten und/oder Signale Daten sind, die sich auf Kommunikationsdaten oder Statusdaten beziehen, die an ein weiteres Endgerät gerichtet sind und über eine Internetverbindung ausgetauscht werden.

9. Verfahren nach Anspruch 8,
**dadurch gekennzeichnet, dass**
das Endbenutzergerät und der Empfänger mit demselben lokalen Netzwerk verbunden sind und im Falle, dass das Endbenutzergerät eine Nachricht oder einen Anruf empfängt, eine Benachrichtigung von dem Endbenutzergerät an den Empfänger übertragen und als vordefinierte Daten und/oder Signale zur Anzeige aufbereitet wird, wobei die angezeigten Informationen die vollständige Nachricht, Teile der Nachricht oder allgemeine Informationen über die Nachricht darstellen.

10. Verfahren nach Anspruch 9,
**dadurch gekennzeichnet, dass**
ein vordefinierter internetbasierter Dienst auf dem Endbenutzergerät und auf dem Empfänger betrieben wird, wobei das Endbenutzergerät eine Software ausführt, die in einem spezifischen Benutzerprofil dieses internetbasierten Dienstes eingeloggt ist, und wobei der Empfänger eine Software ausführt, die in demselben spezifischen Benutzerprofil dieses internetbasierten Dienstes eingeloggt ist, wobei für den Fall, dass eine Nachricht oder ein Anruf von diesem internetbasierten Dienst für dieses spezifische Benutzerprofil erneut empfangen wird, der Empfänger diese Nachricht oder diesen Anruf als vordefinierte Daten und/oder Signal zur Anzeige verarbeitet, wobei die angezeigten Informationen die vollständige Nachricht, Teile der Nachricht oder allgemeine Informationen über die Nachricht darstellen.

11. Verfahren nach einem der Ansprüche 8, 9 oder 10,
**dadurch gekennzeichnet, dass**
der internetbasierte Dienst ein Instant-Messenger-Dienst oder ein E-Mail-Dienst oder ein Kalenderdienst ist.

12. Verfahren nach einem der Ansprüche 8, 9 oder 10,
**dadurch gekennzeichnet, dass**
die vordefinierten Daten Statusdaten eines Endbenutzergeräts darstellen, wobei das Endbenutzergerät ein intelligenter Haushaltsgegenstand ist, wie eine Waschmaschine, eine Geschirrspülmaschine, ein Ofen, ein Kühlschrank, ein Staubsauger, eine Heizung, eine Tür, ein Fenster, ein Fußboden oder dergleichen.

13. Computerprogrammprodukt zum Ausführen des Verfahrens nach einem der Ansprüche 1 bis 12, wenn das Programmprodukt auf einem Computer ausgeführt wird.

14. Fernsehgerät oder Fernsehempfänger,
mit mindestens einer Prozessoreinheit, die zur Ausführung der Schritte des Verfahrens nach einem der Ansprüche 1 bis 12 eingerichtet ist.

## Revendications

1. Méthode pour éviter les écrans noirs lors de la syntonisation des canaux,
comprenant au moins les étapes suivantes
Provoquer un événement d'accord de canal pour accorder un récepteur d'un premier canal à un deuxième canal,
Déterminer (10) au moins une propriété du second canal,
dans lequel la au moins une propriété du second canal est dérivée d'un EPG,
dans lequel la propriété représente une classe de contenu,
dans lequel la classe de contenu déterminée représente l'une d'un nombre prédéfini de classes de contenu,
dans lequel chaque classe de contenu représente une valeur ou une fonction,
Déterminer des données et/ou des signaux prédéfinis représentant le contenu à délivrer visuellement et/ou acoustiquement en fonction de la propriété déterminée,
acheminer les données et/ou signaux prédéfinis d'au moins une source vers un moyen d'affichage pour convertir les données et/ou signaux en contenu visuel et/ou acoustique,
Sortie (13) du contenu visuel et/ou acoustique au moyen du moyen d'affichage après que l'événement de syntonisation de canal ait été provoqué et avant que le programme du deuxième canal ne soit affiché,
dans lequel le temps entre l'événement de syntonisation de canal et l'affichage du programme du deuxième canal dépend de la valeur ou de la fonction respective.

2. Méthode selon la revendication 1,
**caractérisé en ce que**
les données et/ou signaux prédéfinis représentant un contenu visuel et/ou acoustique sont demandés par le récepteur en fonction de la propriété déterminée,
dans lequel les données prédéfinies et/ou les signaux représentant le contenu visuel et/ou acoustique sont fournis par un fournisseur de radiodiffusion et acheminés via l'Internet, le câble, le satellite ou l'antenne terrestre vers le récepteur.

3. Méthode selon l'une quelconque des revendications précédentes,
**caractérisé en ce que**
les données et/ou signaux prédéfinis représentant un contenu visuel et/ou acoustique sont définis au moyen d'un algorithme d'apprentissage profond, l'algorithme d'apprentissage profond traitant les données relatives aux intérêts de l'utilisateur et/ou au comportement de zapping et/ou aux données de profil d'un utilisateur.

4. Méthode selon la revendication 3,
**caractérisé en ce que**
les données de profil contiennent des données de service en ligne représentant le type de service(s) en ligne, la fréquence d'utilisation dudit service(s) en ligne,

5. Méthode selon l'une quelconque des revendications précédentes,
**caractérisé en ce que**
les données et/ou signaux prédéfinis représentent des informations de programme et/ou de la publicité.

6. Méthode selon l'une quelconque des revendications précédentes,
**caractérisé en ce que**
le récepteur dérive du signal de canal ou d'une adresse IP des données de localisation représentant des informations de zone, les données et/ou signaux prédéfinis représentant des informations collectées en fonction des données de localisation.

7. Méthode selon la revendication 6,
**caractérisé en ce que**
les données et/ou signaux prédéfinis représentent des informations sur
la météo dans la zone identifiée ou dans une zone préférée et/ou
des événements dans la zone identifiée ou dans une zone préférée.

8. Méthode selon l'une quelconque des revendications précédentes,
**caractérisé en ce que**
les données et/ou signaux prédéfinis sont/sont des données relatives à des données de communication ou des données d'état dirigées vers un autre dispositif d'utilisateur final et échangées via une connexion internet.

9. Méthode selon la revendication 8,
**caractérisé en ce que**
le dispositif d'utilisateur final et le récepteur sont connectés au même réseau local et dans le cas où le dispositif d'utilisateur final reçoit un message ou un appel, une notification est transférée du dispositif d'utilisateur final au récepteur et traitée en tant que données et/ou signaux prédéfinis pour l'affichage, dans lequel les informations affichées représentent le message complet, des parties du message ou des informations générales sur le message.

10. Méthode selon la revendication 9,
**caractérisé en ce que**
un service basé sur Internet prédéfini est exploité sur le dispositif d'utilisateur final et sur le récepteur, dans lequel le dispositif d'utilisateur final exécute un logiciel qui est connecté à un profil d'utilisateur spécifique de ce service basé sur Internet et dans lequel le récepteur exécute un logiciel qui est connecté au même profil d'utilisateur spécifique de ce service basé sur Internet, dans lequel, dans le cas où un message ou un appel est reçu à nouveau par ce service basé sur Internet pour ce profil d'utilisateur spécifique, le récepteur traite ce message ou cet appel en tant que données prédéfinies et/ou signal pour l'affichage, dans lequel les informations affichées représentent le message complet, des parties du message ou des informations générales sur le message.

11. Méthode selon les revendications 8, 9 ou 10,
**caractérisé en ce que**
le service basé sur Internet est un service de messagerie instantanée ou un service de courrier électronique ou un service de calendrier.

12. Méthode selon les revendications 8, 9 ou 10,
**caractérisé en ce que**
les données prédéfinies représentent des données d'état d'un dispositif d'utilisateur final, dans lequel le dispositif d'utilisateur final est un article ménager intelligent, comme une machine à laver, un lave-vaisselle, un four, un réfrigérateur, un aspirateur, un appareil de chauffage, une porte, une fenêtre, un plancher ou similaire.

13. Produit de programme d'ordinateur pour mettre en oeuvre la méthode de l'une quelconque des revendications 1 à 12 lorsque ledit produit de programme est exécuté sur un ordinateur.

14. Téléviseur ou récepteur de télévision,
comprenant au moins une unité de traitement équipée pour exécuter les étapes de la méthode de l'une quelconque des revendications 1 à 12.
